Europäisches Patentamt

European Patent Office

Office européen des brevets

(11) Veröffentlichungsnummer: **0 041 079**

**A1**

(12) **EUROPÄISCHE PATENTANMELDUNG**

(21) Anmeldenummer: **80108225.6**

(22) Anmeldetag: **27.12.80**

(51) Int. Cl.³: **F 16 C 33/62**
    **F 16 C 33/44**

(30) Priorität: **04.06.80 DE 8014929 U**

(43) Veröffentlichungstag der Anmeldung:
    **09.12.81 Patentblatt 81/49**

(84) Benannte Vertragsstaaten:
    **AT BE CH DE FR GB IT LI NL SE**

(71) Anmelder: **Gebrüder Schmeing**
    **Holthausener Strasse 9**
    **D-4280 Borken-Weseke(DE)**

(72) Erfinder: **Meyer, Hermann**
    **Von Manderscheidt Strasse 4**
    **D-4426 Vreden(DE)**

(74) Vertreter: **Habbel, Hans-Georg, Dipl.-Ing.**
    **Postfach 3429 Am Kanonengraben 11**
    **D-4400 Münster(DE)**

(54) **Wälzlager.**

(57) Bei einem Wälzlager bestehen die Lagerringe (3,4) aus hoch- oder höchstmolekularem Niederdruck-Polyäthylen, während der Käfig (2) — wenn ein solcher vorhanden ist — aus Polypropylen oder Polyäthylen gebildet wird.

EP 0 041 079 A1

- 1 -

Wälzlager
<hr>

Die Erfindung bezieht sich auf ein Wälzlager, z.B. ein Kugellager mit Lagerringen, Rollelementen und gegebenenfalls einem diese Rollelemente fassenden Käfig.

In der Technik sind solche Wälzlager bekannt, und zwar aus Stahl oder aus Kunststoff, wobei üblicherweise bei aus Kunststoff gefertigten Wälzlagern die Lagerringe aus Polyacetal oder einem ähnlichen Kunststoff bestehen, während die Käfige - falls solche vorhanden sind - aus einem Polyamid oder Polyurethan gefertigt sind. Die Kugeln können dabei aus Glas oder Stahl hergestellt sein.

Bei diesen bekannten Wälzlagern, die insbesondere in Verbindung mit aggressiven Medien und bei Trockenlauf eingesetzt werden, hat sich herausgestellt, daß

die herkömmlichen Ausführungen nicht den Anforderungen entsprechen, die Verbraucher und die Praxis an solche Spezialwälzlager stellen. Außerdem wurde für Lagerringe von Kunststoffkugellagern oder -wälzlagern ein möglichst hartes Trägermaterial angestrebt, womit die erhoffte Beseitigung der bestehenden Nachteile nicht erreicht wurde.

Der Erfindung liegt die Aufgabe zugrunde ein Wälzlager zu schaffen, daß auch unter Einwirkung von aggressiven Medien vorteilhafte Eigenschaften, insbesonder eine gute Beständigkeit, aufweist, darüberhinaus eine ideale Gleichfähigkeit und Selbstschmierung besitzt, wobei eine extreme Verschleißfestigkeit gegeben sein soll. Weiter sollen eine gute Schlagfestigkeit, Beständigkeit gegen Schmutzeinwirkung und ein idealer Trockenlauf - ohne Gefahr von Blockierung oder "stickslip" - sichergestellt sein.

Diese der Erfindung zugrundeliegende Aufgabe wird dadurch gelöst, daß die Rollelemente umgebenden Lagerringe aus einem hoch- oder höchstmolekularen Niederdruck-Polyäthylen bestehen.

Hierbei wird insbesondere so vorgegangen, daß das hoch- oder höchstmolekulare Niederdruck-Polyäthylen ein Molekulargewicht größer als 400 000 aufweist, wobei das Molekulargewicht bis 2 000 000 bzw. 8 000 000 ansteigen kann. Hierbei kommt es auf die Bestimmungsmethode an, so daß 2 000 000 viskosimetrisch und 8 000 000 nach der Lichtstruungsmethode gemessen werden.

Derartige Rohstoffe sind bekannt. Die Halbzeuge können im Preß-, Extrusions- oder Spritzgußverfahren mit oder ohne spanabhebende Bearbeitung hergestellt sein, wobei auch Beimischungen zur Eigenschaftsänderung eingeschlossen sind. Derartige Verfahren sind ebenfalls bekannt.

Weiterhin wird gemäß der Erfindung so vorgegangen, daß bei Einsatz des erfindungsgemäßen Lagerringes und Einsatz eines Käfigs, der Käfig selbst aus Polypropylen oder Polyäthylen gebildet wird.

Durch die erfindungsgemäßen Vorschläge wird erreicht, daß die bei den bekannten Wälzlagern aufgetretenen Schwierigkeiten durch Säure bzw. chemische Beeinflussung vollkommen beseitigt werden und zudem besondere Eigenschaften erreicht werden, wie hohe Gleitfähigkeit und Selbstschmierung. Die Verschleißfestigkeit ist extrem hoch und es werden ideale Trockenlaufeigenschaften bei gleichzeitiger hoher Schlagfestigkeit erreicht.

Damit werden gleichzeitig durch längere Haltbarkeit kostbare Rohstoffe eingespart und durch Verlängerung der Verwendungszeit, wie auch reduzierte Wartung bzw. Stillstände erhebliche Wartungskosten und Wiederbeschaffungskosten eingespart.

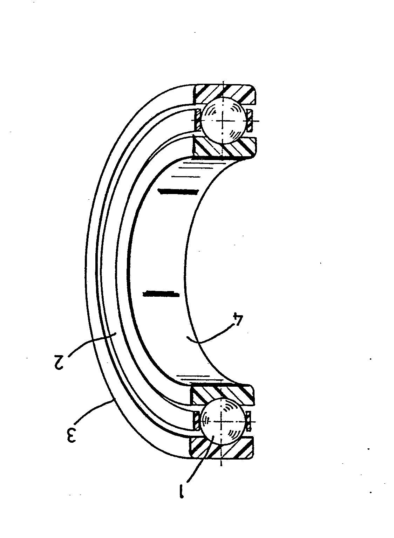

Ein Ausführungsbeispiel der Erfindung wird nachfolgend anhand der Zeichnung erläutert.

In der Zeichnung ist ein Teil eines Wälzlagers dargestellt, wobei die beiden Lagerringe mit 3 und 4, die Rollkörper, die in der Zeichnung als Kugeln ausgebildet sind, aber selbstverständlich auch als Nadeln oder Walzen gestaltet sein können, mit 1 bezeichnet sind. Die eigentlichen Rollelemente 3 werden von einem Käfig 2 getragen, wobei gemäß der Erfindung der Lagerring 3 und der Lagerring 4 aus einem hochmolekularen Niederdruck-Polyäthylen bestehen. Das Molekulargewicht dieses eingesetzen Niederdruck-Polyäthylens soll vorzugsweise zwischen 400 000 und 2 000 000 (bzw. 1,5 Mio. bis 8 Mio. nach Lichtstreuungsmethode gemessen) liegen.

Patentansprüche:

1. Wälzlager mit Lagerringen, Rollelementen und ggf. einem Käfig, dadurch gekennzeichnet, daß die die Rollelemente (1) mit Käfig (2) umgebenden Lagerringe (3, 4) aus hoch- und höchstmolekularem Niederdruck-Polyäthylen jeder Herstellungsart bestehen.

2. Wälzlager nach Anspruch 1, dadurch gekennzeichnet, daß die aus hoch- bzw. höchstmolekularem Niederdruck-Polyäthylen bestehenden Lagerringe (3, 4) Rollelemente (1) in einem Käfig (2) aus Polypropylen umgeben.

3. Wälzlager nach Anspruch 1, dadurch gekennzeichnet, daß die aus höch- oder höchstmolekularem Niederdruck-Polyäthylen bestehenden Lagerringe (3, 4) Rollelemente (1) in einem Käfig (2) aus Polyäthylen umgeben.

4. Wälzlager nach Anspruch 1, dadurch gekennzeichnet, daß die aus hoch- oder höchstmolekularem Niederdruck-Polyäthylen bestehenden Lagerringe (3, 4) die Rollelemente (1) ohne Zwischenschaltung eines Käfigs umgeben.

| Europäisches Patentamt | EUROPÄISCHER RECHERCHENBERICHT | Nummer der Anmeldung<br>EP 80 10 8225.6 |

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int. Cl.³) |
|---|---|---|---|
| X | DE - A - 2 156 081 (RUBBER PLASTICS LTD.)<br>* Ansprüche 1, 9, 14; Fig. 1 * | 1, 4 | F 16 C 33/62<br>F 16 C 33/44 |
| X | DE - U - 1 907 634 (H. BRINKMANN KG)<br>* Ansprüche 1, 2 * | 1-4 | |
| A | "STAR Rillenkugellager aus Kunststoff" Druckschrift Nr. 93/1/76/3 der Firma Deutsche STAR Kugelhalter GmbH, Schweinfurt<br>* gesamtes Dokument * | | **RECHERCHIERTE SACHGEBIETE (Int. Cl.³)**<br><br>F 16 C 19/00<br>F 16 C 33/00 |
| P,X | DE - U1 - 8 014 929 (GEBR. SCHMEING)<br>* gesamtes Dokument * | 1-3 | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie. Übereinstimmendes Dokument

X Der vorliegende Recherchenbericht wurde für alle Patentansprüche erstellt.

| Recherchenort<br>Berlin | Abschlußdatum der Recherche<br>03-09-1981 | Prüfer<br>MASSALSKI |

EPA form 1503.1 06.78